# EUROPEAN PATENT SPECIFICATION

(11) **EP 2 550 459 B1**
(45) Date of publication and mention of the grant of the patent: **26.08.2015**
(21) Application number: 11709957.2
(22) Date of filing: 24.03.2011
(51) Int. Cl.: F04D 29/16, F16J 15/32, F16J 15/16

(54) **CENTRIFUGAL PUMP AND SEALING MEANS**
ZENTRIFUGALPUMPE UND DICHTUNGSMITTEL
POMPE CENTRIFUGE ET MOYEN D'ÉTANCHÉITÉ

(30) Priority: 25.03.2010 IT BO20100190
(43) Date of publication of application: 30.01.2013
(73) Proprietor: Caprari S.p.A., 41123 Modena (IT)
(72) Inventor: GAMBIGLIANI ZOCCOLI, Antonio, I-41123 Modena (IT)
(74) Representative: Manzella & Associati
(86) International application number: PCT/EP2011/054558
(87) International publication number: WO 2011/117359

(56) References cited:
- DE-A1- 19 613 486
- DE-A1- 19 639 928
- GB-A- 1 110 660
- US-A- 3 228 342

## Description

### Technical Field

The present invention regards a centrifugal pump, as well as sealing means for centrifugal pumps.

### Background Art

It has been known that in order to transport fluids from a first height to a second height more elevated with respect to the first one, pumping members of the type of the centrifugal pumps are used. Centrifugal pumps usually comprise one or more pumping stages suitable to be crossed by the fluid to be transported, each one comprising an impeller member and a diffuser member suitably mounted on a shaft, so-called "pump shaft", and inserted inside a containment case.

The impeller member of each stage usually comprises a fluid inlet section at a zone in proximity of the axis of the pump shaft and a fluid outlet section at a peripheral zone in proximity of the case. More precisely, the impeller member comprises a plurality of vanes generally curved suitable to define respective outflow channels to drive the liquid from the inlet section to the outlet section. In order to determine the transfer of the liquid, the impeller member is suitable to be driven in rotation by the pump shaft on which it is suitably keyed. Further to the rotation motion of the impeller member and due to the shape of the vanes, the crossing fluid is thus subjected to a substantially centrifugal motion which increases the fluid dynamic energy thereof, so as to make the passage from a stage to the successive one possible up to the outlet or discharge end section of the pumping member.

From a pumping stage to the successive one, according to a feed direction, the fluid is suitable to be conveyed suitably through the diffuser member associated in a fixed way with the body of the pumping member. The diffuser member generally comprises a plurality of sectors suitable to convey the return of the fluid from the peripheral zone in proximity of the case to the central zone in proximity of the inlet section of the impeller member of the successive pumping stage.

For an efficient functioning of the centrifugal pump it is important that the liquid recirculation from more elevated pressure zones to less elevated pressure zones be reduced at the minimum. Such a phenomenon, which determines undesired yield losses, can occur mainly due to the fluid return through the meatus defined between the fixed parts and the mobile parts of the centrifugal pump.

It is therefore important, in order to avoid such effect, that suitable sealing members capable of sealing in a sufficiently efficient way such meatus allowing in the meanwhile the efficient actuation of the rotating parts are provided.

As an example it has been known from patent EP0257358 a hydraulic sealing ring suitable to used in monostage and multistage pumps, made in plastic material and shaping an internal side suitable to be coupled to the external surface of the inlet section of the impeller member. The hydraulic seal ring has also radial openings suitable to set in communication the cited internal side with the external side to enable the passage of reduced quantities of liquid from the outlet of the impeller member and therefore the formation of a thin fluid layer for lubricating the surfaces interested to slithering actions.

Further solutions of seal rings suitable to be interposed between impeller member and fixed parts of the pump are for example illustrated in patent application US 2004/0028524 A1 and in patent US 5,577,886.

The fluid transported by the centrifugal pump usually consists of water, for example to be extracted from the subsoil. The liquid to be transferred can contain solid particles in suspension of various natures and dimensions. Such particles, mainly constituted of sand, are subjected to be drawn by the water stream in the pumping steps through the unique stage or the multiple stages of the centrifugal pump.

Such solid particles may compromise the correct functioning of the pump, mainly because they may enter the meatus between the fixed parts and the mobile parts of the pump. The presence of such particles increases the drawing friction between the fixed parts and the parts in motion of the pump, causing the surface damage thereof. Furthermore, the solid particles turn out to be particularly harmful when they remain blocked, when the pump is off, inside the meatus existing between the fixed and mobile members. In this case they may determinate, upon starting, resistant forces which prevent the activation of the pump, causing the so-called "seizure" thereof. Such a circumstance occurs especially in the applications which imply electrical motors with reduced performances at the acceleration.

English patent 1,110,660 describes improvements concerning seal means for centrifugal pumps, particularly adapted to pumps which must operate with liquids that contain abrasive substances. In particular, seal rings are provided, of substantially rectangular shape, equipped with a lip which extends radially towards the inside and mobile, by effect of the hydrodynamic thrust, between a disengagement distanced position, when the pump is stopped, and a seal position, when the pump is operating.

US patent 3,228,342 regards seal means for centrifugal pumps comprising a flexible appendix mobile between a distanced static configuration and a seal dynamic position, suitable to prevent the return of the fluid during the functioning of the pump.

The solutions proposed to date in order to warrant the hydraulic seal between rotating parts and fixed parts, do not result to be satisfying with respect to the reliability exigencies of the specific sector and to the variety of applications required.

### Disclosure

The task of the present invention is that of solving the cited problems, devising a centrifugal pump having a reliable functioning that allows to obtain high yields.

Another scope of the invention is that of providing a centrifugal pump that can be used in a versatile way.

Within such a task, it is further scope of the present invention that of providing seal means suitable to be used in a centrifugal pump and to warrant an optimal functioning.

A further scope of the invention is that of providing a centrifugal pump, and seal means, having a simple conception, as well as a securely reliable functioning and versatile use and involving relatively economic costs.

The aforementioned scopes are attained, according to the present invention, by the sealing means in combination with a centrifugal pump according to claim 1.

### Description of Drawings

Details of the invention shall be more apparent from the detailed description of a preferred embodiment of the centrifugal pump according to the invention, illustrated for indicative purposes in the attached drawings, wherein:
figure 1 shows an axial section view of the centrifugal pump according to the invention;

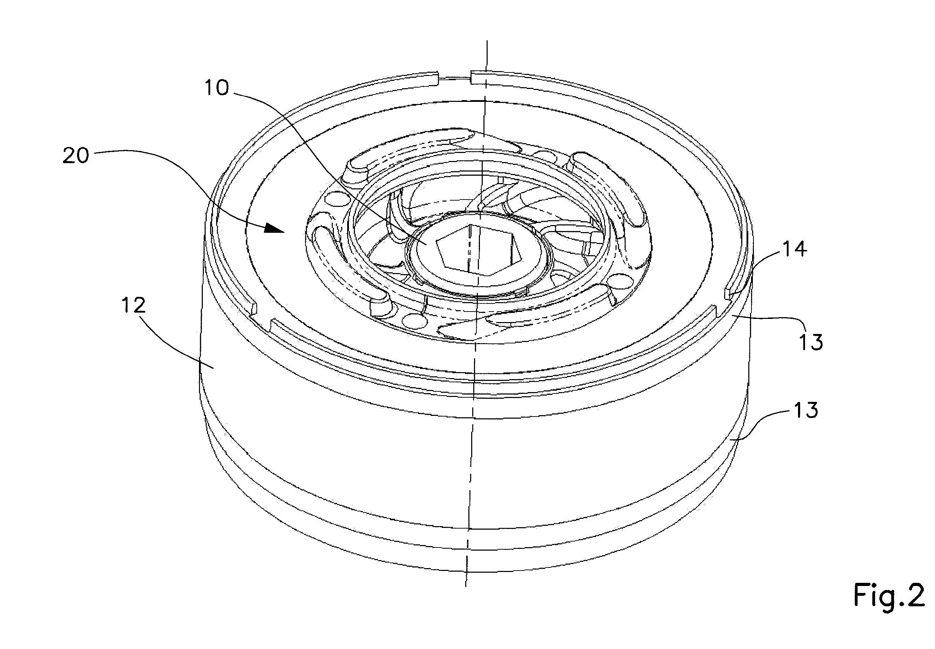

figure 2 shows a perspective view of a portion of the same pump;
figure 3 shows a perspective section view according to an axial plane of the portion of the centrifugal pump illustrated in figure 2;

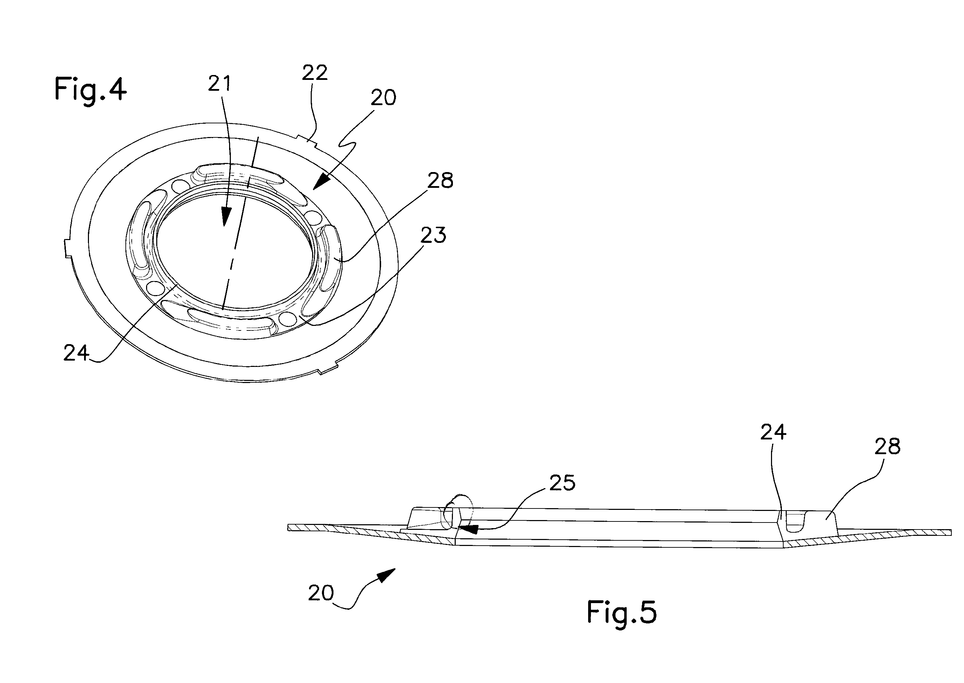

figures 4 and 5 respectively show a perspective and an axial section view of the seal means suitable to be used in the centrifugal pump in hand and that can be seen in section in figure 3;
figures 6a and 6b show an enlarged view of a detail of the seal means illustrated in figures 4 and 5, respectively in an inactive configuration and in an active configuration.

### Best Mode

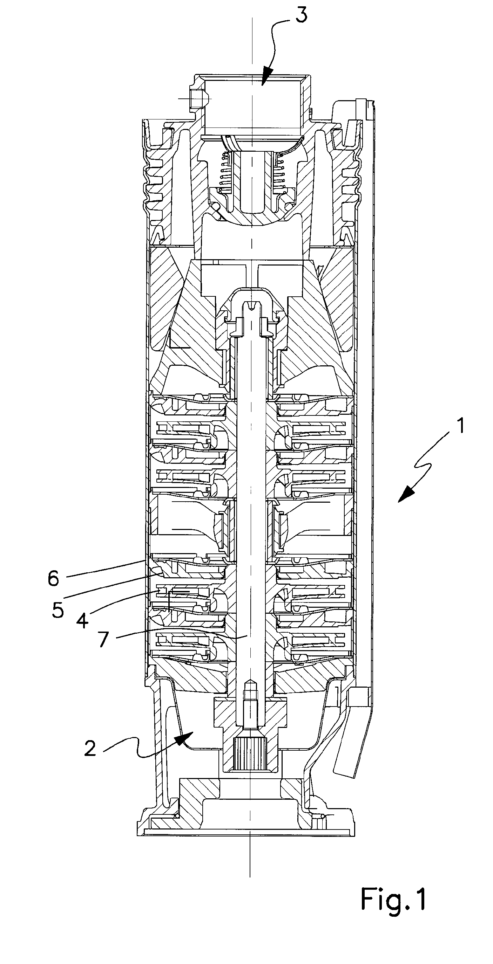

With particular reference to such figures, a centrifugal pump is indicated in its entirety with 1. The centrifugal pump 1 is suitable to pump a liquid, for example water, from an inlet or suction section 2 to an outlet or discharge section 3 through one or more pumping stages. In the illustrated case the centrifugal pump 1 comprises a plurality of pumping stages, each comprising an impeller member 4 and a diffuser member 5, contained inside a cylindrical case 6 (see figure 1). Obviously it is possible to alternatively provide that the pump 1 be simply mono-stage, thus comprising a single pumping stage.

In the case illustrated in figure 1, the pump 1 comprises four pumping stages assembled in sequence on the pump shaft 7 suitable to set in rotation four corresponding impeller members 4, each being suitable to transfer the fluid to be pumped from an axial respective feed portion 8 and a peripheral outflow portion 9.

More precisely, each impeller member 4 is suitable, in a known way, to be keyed integral to the pump shaft 7 by means of a sleeve 10.

At the feed portion 8 the impeller member 4 shapes a tubular entrance portion 11, having an expansion substantially parallel to the sleeve 10. Therefore between the sleeve 10 and the tubular portion 11 there is defined an axially extending ring zone corresponding to the cited feed portion 8.

Each impeller member 4 is suitable to be arranged coaxial inside a tubular element 12 for containing the pumped fluid, for example made of metal sheet. The tubular element 12 is suitable to be associated coaxial in a fixed manner inside the case 6, in abutment of the respective internal wall.

Except the end pumping stage, in the provided sequence, downstream of each impeller member 4 there is arranged a corresponding diffuser member 5 suitable to convey the exiting fluid from the peripheral outflow portion 9 of the impeller member 4 arranged upstream, to the axial feed portion 8 of the impeller member 4 of the successive pumping stage.

The diffuser member 5 preferably comprises connection means 13, for example realized by means of an external ring relief suitable to function as abutment for positioning at the top of a corresponding edge of the tubular element 12. The diffuser member 5 further comprises seats 14 for positioning seal means 20. The seats 14 are made for example of a plurality of longitudinal notches.

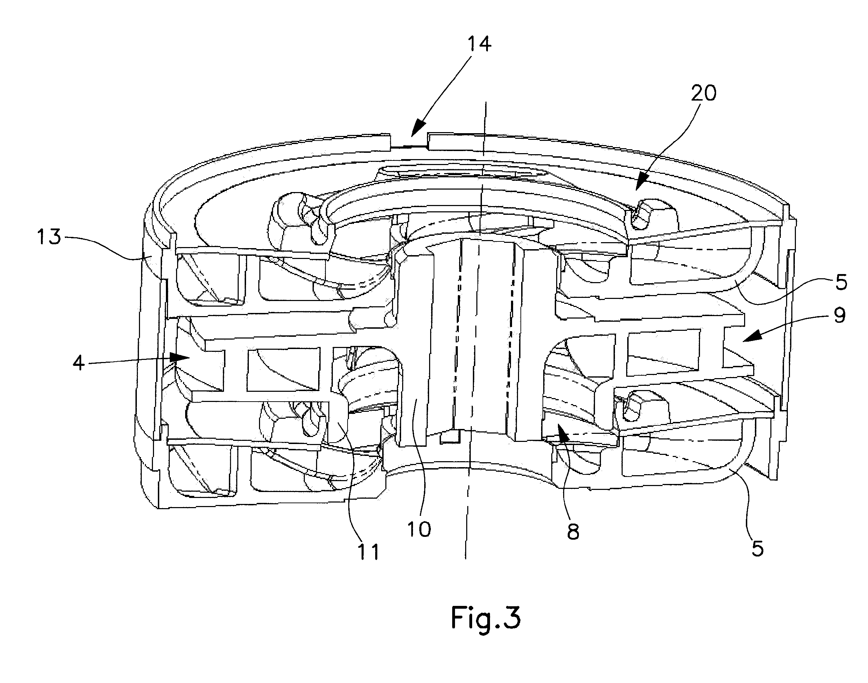

The seal means 20 are suitable to be interposed between fixed members and rotating members of the centrifugal pump 1 and, in particular, at the feed portion 8 of the impeller member 4, at the top of the diffuser member 5 (see figure 3).

The seal means 20 have a discoid ring shape and carry a central opening 21 for inserting around the mobile parts keyed on the pump shaft 7 (see figure 4).

As previously outlined, the ring 20 has means for positioning to the fixed parts of the pump 1, for example realized by means of a plurality of teeth 22 suitable to be inserted in the axial notches 14 peripherally provided in the diffuser member 5. The ring 20 is in fact suitable to be overlapped to the diffuser member in a way as to cover the same. To such an end it is for example possible to provide that the plane of the discoid ring 20 follow the trend of the diffuser member 5, with a shape slightly concave towards the central opening 21.

At the central opening 21 the ring 20 has a ring flexible portion 23, preferably made of rubber. The flexible portion 23 may be for example reported through vulcanization on the ring 20, which is preferably of rigid material, for example metallic, made of steel.

The flexible portion 23 comprises a thin annular lip 24 which extends in a substantially axial direction at the edge of the central opening 21. Therefore, in use, the annular lip 24 extends axially from the cited edge of the flexible portion 23 in the outflow direction of the pumped liquid. The annular lip 24 has an operating surface 25 oriented towards the central opening 21 and suitable, in use, that is when it is associated with the fixed and mobile members of the pump 1, to be arranged facing the external surface 15 of the sleeve 10 of the impeller member 4 at the feed portion 8. More precisely, between the fixed operating surface 25 and the mobile external surface 15 of the impeller member 4 there is defined a meatus 26 of determined width. In virtue of the thinned conformation of the annular lip 24, and of the proper flexibility of the material, e.g. rubber, the annular lip 24 is elastically mobile between a rest configuration 24a which takes place when the pump 1 is in standby or switched off, and an active configuration 24b, when the pump 1 is functioning. More precisely, when the pump is not in function, the annular lip 24 is stressed by the only static pressure of the liquid stagnating in the body of the pump 1 and, in particular, the annular lip 24 is in condition of equilibrium of the stresses acting on the operating surface 25 and on the surface opposed thereto, thus steadily entering the cited rest configuration 24a oriented axially and, in particular, spaced away from the external surface 15 of the sleeve 10. In such a rest configuration 24a the meatus 26 has determined and maximal width, such as to enable the passage of the solid particles possibly drawn by the pumped liquid. The meatus 26 is in this condition advantageously dimensioned, by design, in the measure of some tenths of millimetres and, preferably, of radial width greater than 0,15 mm, so as to allow the passage also of the solid particles having bigger granulometry. In any case, at the successive restart of the centrifugal pump 1, the flexibility of the annular lip 24 allows the easy passage of any solid particle possibly interposed in the meatus 26, therefore avoiding any risk of seizure.

During the functioning of the centrifugal pump 1, instead, the annular lip 24 is stressed further than by the static pressure also by the dynamic pressure of the pump liquid, in particular acting with a bigger pressure on the surface of the lip opposite to the operating surface 25, under effect of the pressure increment that takes place between a pumping stage and the successive one. By virtue of the flexibility given by the thinned conformation and by the properties of the material, the annular lip 24 is thus elastically pushed and rotated about the edge of the flexible portion 23 of the ring 20 by the fluid dynamic action of the pumped liquid until reaching the active configuration 24b in abutment against the external surface 15.

At the active configuration 24b, as a consequence, the meatus 26 has a minimal width, substantially null, such as to realize the efficient seal between a pumping stage and the adjacent stage. In fact, thanks to the abutment of the annular lip 24 against the external surface 15 of the sleeve 10, recirculation of the liquid from a major pressure stage to the minor pressure stage turns out to be minimal, to the advantage of overall yield of the pump.

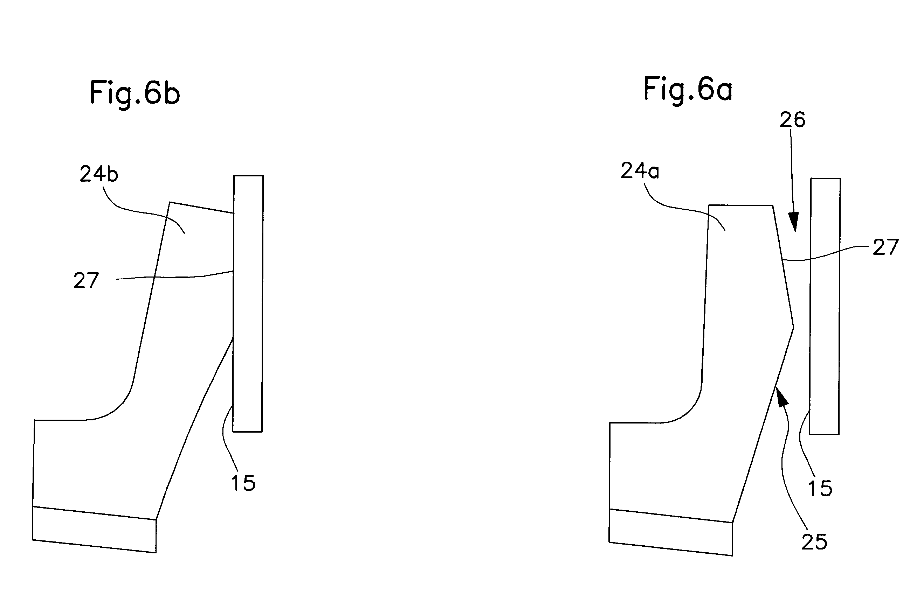

In order to further increase the yield of the pump, it is provided, according to a preferred embodiment illustrated in detail in figures 6a and 6b, that the lip 24 of the ring 20 be conformed in such a way that in the active configuration 24b, the operating surface 25 is in abutment against the external surface 15 of the sleeve 10 at a corresponding continuous cylindrical strip. In such a way the formation of thin liquid film between the fixed operating surface 25 and the rotating external surface 15, that reduces the friction during the functioning of the centrifugal pump 1, turns out to be favoured. Such an effect is reached providing that the operating surface 25 comprises in section a diverging tract 27 preferably rectilinear, such as to shape a corresponding flare of the thin lip 24. In particular the extent of such a flare or inclination is determined in such a way that, further to the cited rotation of the thin lip 24 under effect of the fluid dynamic action of the liquid when the pump is functioning, the operating surface 25 arranges itself parallel to the external surface 15 of the sleeve 10 at the diverging tract 27 (see figure 6b). Therefore the effective contact is realized on respective parallel surfaces, corresponding to a cylindrical strip of axial extension equal to the extension of the diverging tract 27. Such a liquid film has a lubricating effect on the coupled surfaces, of the type so-called "aquaplaning". In fact the surfaces in contact slide on each other so as to minimize the drawing friction between the fixed ring 20 and the impeller member 4 during the functioning of the pump 1.

The flexible portion 23 also has hardening and containment edges 28 arranged at the back of the annular lip 24. In particular the edges 28 are suitable to protect the integrity of the annular lip 24 during the steps of transport of the component.

In the illustrated case the ring 20 has four edges 28 angularly distanced in a regular way, but a different number as well as a different disposition can be provided.

The functioning of the centrifugal pump according to the invention, as well as of the seal means used therein, turn out to be easy to understand from the preceding description.

When the centrifugal pump 1 is set at work and is in rest condition, the liquid entered through the sucking aperture stagnates inside the pump, filling all the pumping stages underneath the surface of the water.

Therefore when the pump is in rest condition the annular lip 24 of the seal means 20 is arranged in rest configuration, inactive, oriented in axial direction. In particular, for the seal means 20 placed upstream of a corresponding impeller member 4, the meatus 26 defined between the external surface 15 of the sleeve 10 and the operating surface 25 of the annular lip 24 is maximal and determined, such as to allow the easy passage of possible solid particles drawn by the liquid. In particular such a circumstance avoids that the solid particles drawn by the liquid can remain embedded between the opposite walls of the meatus 26, making the successive restart of the pump 1 difficult until the complete blocking of the same (see figure 6a).

When the pump 1 is actuated, the motor shaft 7 is brought in rotation along with the impeller members 4 integral thereto. The actuation of the motor shaft 7 triggers the transfer of the liquid through the successive pumping stages until the outlet or discharge section 3, to reach at last, through suitable pipings connected to the discharge, the desired use.

Upon starting the centrifugal pump 1, it is to be observed that if possible solid particles are present in the meatus 26 between the corresponding facing surfaces of the rotating members and of the fixed members, they do not remain embedded but flow easily, thanks to the flexibility of the annular lip 24, which offers minimal resistance to their passage, avoiding the seizure of the pumping member.

When the pump is functioning the outflowing liquid exerts on the lip 24 a continuous dynamic action that finds equilibrium in the cited active configuration 24b at which the lip 24 is rotated close to the external surface 15 of the sleeve 10. Such a rotation then causes the tight closing of the meatus 26 suitable to reduce the recirculation of the liquid and so the entity of the water losses between the pumping stages.

Therefore the centrifugal pump attains the scope of allowing a reliable functioning at high yields. Such a scope is attained in particular through the seal means 20 suitable to operate with the annular lip 24, elastically mobile between the rest configuration 24a, when the pump is stopped, and the active configuration 24b, when the pump is functioning.

The conformation of the lip 24 of the seal means 20 which provides the internal flare at the cited diverging tract 27 of the operating surface 25 results particularly advantageous. In fact such a conformation locates the drawing coupling between mobile parts and fixed parts at a continuous cylindrical strip, favouring the formation of a continuous liquid film between facing walls with an advantageous lubricating effect. Such an effect reduces at the minimum the friction between the drawing surfaces, optimizing the yield of the pump.

The cited conformation with lip 24 having diverging tract 27 is advantageous also when the pump is stopped. In fact such a conformation, which at stopped pump is inclined instead of parallel with respect to the external surface 15, determines a meatus 26 at distance axially variable with respect to the external surface 15, having minimal distance localized in a reduced zone, substantially concentrated at the origin of the diverging or inclined tract 27. The solid particles present in the fluid transferred by the pump thus find an easier passage for the outflow.

A characteristic of the invention is also given in that the thin conformation and the characteristics of the material, preferably rubber, of the lip 24 concur to emphasize the flexibility thereof. Such a property is particularly advantageous, further to in the functioning of the pump under the effect of water seal, also in the starting step. In fact thanks to the flexibility of the lip 24, possible particles which would be present in the meatus 26 in such a step, can easily flow from the same meatus. In other words, unlike the external surface 15 of the impeller member 4 which is generally rigid, the operating surface 25 of the lip 24 only offers a minimal resistance to the outflow of such solid particles, reducing the risk of seizing the pump and minimizing the absorption of energy at the acceleration. Because of this, the centrifugal pump 1 turns out to be reliable in the functioning with any type of electric motor, also with reduced couple at the acceleration, as in the case of the mono-phase electric motors often required by some application sectors.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Sealing means in combination with a centrifugal pump of the type comprising at least one impeller member (4) suitable to be driven in rotation for transporting a fluid, said sealing means (20) being suitable to be fixed at the body of the pump and cooperating with a feed portion (8) of said impeller member (4), said sealing means (20) comprising at least one flexible portion (23) shaping an annular lip (24), suitable to be elastically driven between a rest configuration (24a) and a tight active configuration (24b) at which said annular lip (24) is stressed in abutment against an opposite external surface (15) of said feed portion (8) upon the thrust of the transported fluid, said sealing means (20) having a discoid ring shape comprising a central opening (21) and said annular lip (24) having a thinned shape and having axial extension from the edge of said central opening (21), said annular lip (24), at said rest configuration (24a), being spaced by a meatus (26) of determined width from said opposite external surface (15), **characterized in that** said annular lip (24) has an operative surface (25) directed towards said central opening (21) comprising in cross section a divergent tract (27), so that when said annular lip (24) is in said active configuration (24b), said divergent tract (27) of said operative surface (25) rotates and arranges itself parallel to said external surface (15).

2. Sealing means in combination with a centrifugal pump according to claim 1, **characterized in that** in said rest configuration (24a) of said annular lip (24), said meatus (26) has a radial width equal to at least 0,15 mm.

3. Sealing means in combination with a centrifugal pump according to claim 1, **characterized in that** said flexible portion (23) is made of vulcanized rubber on said discoid ring.

4. Sealing means in combination with a centrifugal pump according to one of the previous claims, **characterized in that** they comprise protection edges (28) arranged at the back of said annular lip (24).

5. Sealing means in combination with a centrifugal pump according to claim 3, **characterized in that** said discoid ring is made of steel.

6. Sealing means in combination with a centrifugal pump according to one of the previous claims, **characterized in that** they comprise means (22) for positioning with respect to the fixed body of said pump (1), comprising a plurality of teeth arranged peripherally to said discoid ring.

## Patentansprüche

1. Dichtungsmittel in Kombination mit einer Kreiselpumpe der Art, die mindestens ein Laufradelement (4) umfasst, das dafür geeignet ist, für das Transportieren eines Fluids in Rotation versetzt zu werden, wobei die Dichtungsmittel (20) dafür geeignet sind, am Körper der Pumpe und in Zusammenarbeit mit einem Zufuhrabschnitt (8) des Laufradelements (4) befestigt zu sein, wobei die Dichtungsmittel (20) mindestens einen flexiblen Abschnitt (23) umfassen, der eine ringförmige Lippe (24) bildet, die dafür geeignet ist, elastisch zwischen einer Ruheanordnung (24a) und einer abdichtenden aktiven Anordnung (24b) betrieben zu werden, in der die ringförmige Lippe (24) durch die Schubkraft des transportierten Fluids anliegend gegen eine gegenüberliegende Außenfläche (15) des Zufuhrabschnitts (8) gespannt ist, wobei die Dichtungsmittel (20) eine scheibenförmige Ringform aufweisen, die eine Mittelöffnung (21) umfasst, und die ringförmige Lippe (24) eine dünnere Form und eine axiale Erstreckung vom Rand der Mittelöffnung (21) aus aufweist, wobei die ringförmige Lippe (24) in der Ruheanordnung (24a) durch einen Gang (26) bestimmter Breite von der gegenüberliegenden Außenfläche (15) beabstandet ist,
**dadurch gekennzeichnet, dass** die ringförmige Lippe (24) eine funktionsfähige Fläche (25) aufweist, die hin zur Mittelöffnung (21) gerichtet ist und im Querschnitt einen zurückweichenden Teil (27) umfasst, so dass sich der zurückweichende Teil (27) der funktionsfähigen Fläche (25) dreht und selbst parallel zur Außenfläche (15) anordnet, wenn sich die ringförmige Lippe (24) in der aktiven Anordnung (24b) befindet.

2. Dichtungsmittel in Kombination mit einer Kreiselpumpe nach Anspruch 1, **dadurch gekennzeichnet, dass** der Gang (26) in der Ruheanordnung (24a) der ringförmigen Lippe (24) eine radiale Weite gleich mindestens 0,15 mm aufweist.

3. Dichtungsmittel in Kombination mit einer Kreiselpumpe nach Anspruch 1, **dadurch gekennzeichnet, dass** der flexible Abschnitt (23) aus vulkanisiertem Kautschuk auf dem scheibenförmigen Ring besteht.

4. Dichtungsmittel in Kombination mit einer Kreiselpumpe nach einem der vorhergehenden Ansprüche, **dadurch gekennzeichnet, dass** sie Schutzränder (28) umfassen, die an der Rückseite der ringförmigen Lippe (24) angeordnet sind.

5. Dichtungsmittel in Kombination mit einer Kreiselpumpe nach Anspruch 3, **dadurch gekennzeichnet, dass** der scheibenförmige Ring aus Stahl besteht.

6. Dichtungsmittel in Kombination mit einer Kreiselpumpe nach einem der vorhergehenden Ansprüche, **dadurch gekennzeichnet, dass** sie Mittel (22) zum Positionieren im Verhältnis zum feststehenden Körper der Pumpe (1) umfassen, die mehrere Zähne umfassen, welche umlaufend um den scheibenförmigen Ring herum angeordnet sind.

## Revendications

1. Moyens d'étanchéité en combinaison avec une pompe centrifuge du type comprenant au moins un organe de roue (4) adapté pour être entraîné en rotation pour le transport d'un fluide, lesdits moyens d'étanchéité (20) étant adaptés pour être fixés au corps de la pompe et coopérant avec une portion d'alimentation (8) dudit organe de roue (4), lesdits moyens d'étanchéité (20) comprenant au moins une portion flexible (23) de forme correspondant à une lèvre annulaire (24), adapté pour être actionné élastiquement entre une configuration au repos (24a) et une configuration active (24b) d'étanchéité en correspondance de laquelle ladite lèvre annulaire (24) est sollicitée en butée contre ladite surface extérieure (15) sous l'effet de poussée du fluide transporté, lesdits moyens d'étanchéité (20) ayant une forme d'anneau discoïde comprenant une ouverture centrale (21) et ladite lèvre annulaire (24) ayant une forme amincie et s'étendant axialement à partir du bord de ladite ouverture centrale (21), ladite lèvre annulaire (24), dans ladite configuration au repos (24a), étant écartée par un interstice (26) d'amplitude déterminée de ladite surface extérieure (15) opposée, **caractérisés en ce que** ladite lèvre annulaire (24) présente une surface fonctionnelle (25) orientée vers ladite ouverture centrale (21) comprenant en coupe un tronçon divergent (27), de manière que, en correspondance de ladite configuration active (24b), ledit tronçon divergent (27) de ladite surface fonctionnelle (25) tourne et se dispose parallèlement à ladite surface extérieure (15).

2. Moyens d'étanchéité en combinaison avec une pompe centrifuge selon la revendication 1, **caractérisés en ce que**, dans ladite condition au repos (24a) de ladite lèvre annulaire (24), ledit interstice (26) a une amplitude radiale égale à au moins 0,15 mm.

3. Moyens d'étanchéité en combinaison avec une pompe centrifuge selon la revendication 1, **caractérisés en ce que** ladite portion flexible (23) est réalisée en caoutchouc vulcanisé sur ledit anneau discoïde.

4. Moyens d'étanchéité en combinaison avec une pompe centrifuge selon une des revendications précédentes, **caractérisés en ce qu'**ils comprennent des rebords (28) de protection disposés à l'arrière de ladite lèvre annulaire (24).

5. Moyens d'étanchéité en combinaison avec une pompe centrifuge selon la revendication 3, **caractérisés en ce que** ledit anneau discoïde est réalisé en acier.

6. Moyens d'étanchéité en combinaison avec une pompe centrifuge selon une des revendications précédentes, **caractérisés en ce qu'**ils comprennent des moyens de positionnement (22) par rapport au corps fixe d'une dite pompe (1), comprenant une pluralité de dents disposées de manière périphérique audit anneau discoïde.
